# FASCICULE DE BREVET EUROPEEN

(11) **EP 2 225 608 B1**
(45) Date de publication et mention de la délivrance du brevet: **30.11.2011**
(21) Numéro de dépôt: 08861437.5
(22) Date de dépôt: 16.12.2008
(51) Int. Cl.: G03B 15/03, G01B 11/24, G01M 17/02

(54) **DISPOSITIF D'EVALUATION DE LA SURFACE D'UN PNEUMATIQUE**
VORRICHTUNG ZUR BEURTEILUNG EINER REIFENFLÄCHE
DEVICE FOR EVALUATING THE SURFACE OF A TYRE

(30) Priorité: 19.12.2007 FR 0760048
(43) Date de publication de la demande: 08.09.2010
(73) Titulaire: Société de Technologie MICHELIN, 63000 Clermont-Ferrand (FR); MICHELIN Recherche et Technique S.A., 1763 Granges-Paccot (CH)
(72) Inventeur: JOLY, Alexandre, F-63800 Cournon d'Auvergne (FR); ZANELLA, Jean-Paul, F-63000 Clermont-Ferrand (FR)
(74) Mandataire: Reynaud, Georges
(86) Numéro de dépôt international: PCT/EP2008/067646
(87) Numéro de publication internationale: WO 2009/077534

(56) Documents cités:
- EP-A- 0 547 365
- EP-A- 1 120 640
- EP-A- 1 647 817
- WO-A-97/07380
- DE-A1- 19 921 650
- GB-A- 2 296 335
- US-A1- 2005 268 707

## Description

L'invention concerne le domaine du contrôle visuel des objets, dans lequel on cherche à saisir l'image, généralement numérique, d'un objet donné dans le but, après analyse et traitement, d'utiliser cette image à des fins d'inspection et de conh-ôle. Ces images sont destinées à donner des informations telles que la couleur ou le niveau de gris, la texture, la brillance ou encore le relief par rapport à une surface de référence.

Plus particulièrement, l'invention s'adresse au domaine de l'acquisition d'une image visuelle des pneumatiques destinés à équiper les véhicules roulant. Ces pneumatiques ont, en règle générale, une couleur noire en raison de l'utilisation du carbone pour renforcer les mélanges élastomériques à base desquels sont réalisés lesdits pneumatiques.

Aussi, il s'avère particulièrement délicat d'interpréter les images acquises à l'aide de capteurs sensibles à la réflexion de la lumière sur la surface du pneumatique. Les effets lumineux engendrés par le relief du pneumatique, par des taches de graisse , les taches diverses, les différences de teintes de noir, ou encore par des décolorations localisées, peuvent être aisément confondus lorsque l'on analyse sans discernement l'image brute fournie par une caméra.

Différentes méthodes d'acquisition d'image ont donc été divulguées dans le but de fournir des données aussi pertinentes que possible à un moyen de traitement numérique apte à comparer cette image avec une image de référence afin de déterminer la conformité du pneumatique à analyser ou rechercher dans cette image des anomalies présentes à la surface du pneumatique.

La publication EP 1 120 640 propose d'utiliser deux caméras séparées et dédiées respectivement à l'acquisition des données relatives au relief et à l'acquisition des données relatives à l'apparence c'est-à-dire aux données telles que la couleur, le niveau de gris ou la brillance. La surface du pneumatique est éclairée par deux sources de lumières affectées chacune à une caméra. Pour éviter les interférences entre les sources de lumières il est proposé de travailler avec des longueurs d'onde de lumières différentes ou de décaler circonférentiellement les caméras et leur source de lumière.

Cette solution, qui nécessite des moyens relativement encombrants, présente également l'inconvénient d'engager des moyens de calcul importants pour superposer les images provenant des deux moyens d'acquisition.

La publication EP 1 477 765 tente de remédier à cette difficulté en proposant un moyen de contrôle comprenant une seule caméra de type matricielle associée à un éclairage de fente pour effectuer une acquisition unique et déterminer simultanément le relief et la brillance de la brillance de la surface à inspecter. La détermination de la brillance est basée sur l'observation du fait que les différences de coloration sur la surface d'un pneumatique telles que les taches de graisse ont pour effet d'augmenter ou de diminuer la dispersion de la longueur d'onde de l'image réfléchie.

Cette méthode d'acquisition présente néanmoins l'inconvénient de se limiter à la seule analyse de brillance, et de prévoir l'usage d'une caméra matricielle dont il est difficile de régler la profondeur de champ en fonction de la courbure du pneumatique, et dont la résolution est inférieure à celle d'une caméra linéaire: De plus, étant limitée à une seule source de lumière, l'analyse des zones à fort relief, comme les sculptures, laisse des zones d'ombres qui sont des sources d'imprécision, et le choix de l'angle d'observation est réduit.

Pour résoudre ce problème, la publication WO/2005/050131 décrit deux solutions alternatives. Selon une première alternative il est proposé d'éclairer la surface à analyser à l'aide d'une lumière de fente orientée sensiblement perpendiculairement à la surface et de disposer deux caméras orientées selon deux directions faisant des angles opposés par rapport à la direction de la lumière incidente. Selon une deuxième alternative, il est prévu de capturer la lumière réfléchie à l'aide de deux miroirs placés selon deux directions opposées. La lumière provenant de ces deux miroirs est alors recombinée à l'aide d'un jeu de prismes en direction d'une caméra unique.

Toutefois, ces solutions, ne permettent pas d'éliminer toutes les zones d'ombre, et nécessitent de recombiner les deux images, soit de manière numérique lorsque les images proviennent des deux caméras, soit par un réglage fin du jeu de miroir. De plus comme cela est évoqué ci-dessus, la résolution des caméras matricielles reste faible et se combine avec la perte de dynamique liée à la complexité de la chaîne optique.

L'objet de l'invention est de proposer une solution qui permet d'acquérir l'image de la surface d'un pneumatique en évitant les effets liés aux zones d'ombre lorsque le relief de la surface est fortement découpé, mais également de fournir les informations suffisantes permettant à un moyen de traitement d'image de distinguer les effets de brillance liés à des taches, à des variations de couleur et à des effets de relief de la surface à examiner.

Pour ce faire, l'invention utilise le principe de fonctionnement des caméras numériques couleur. Ce type de caméra contient des moyens aptes à séparer en un certain nombre de couleurs de base, la lumière réfléchie provenant de l'objet dont on cherche à acquérir l'image. En règle générale, l'objet est éclairé par une lumière naturelle ou lumière blanche.

Ces filtres peuvent être formés par des jeux de prismes, ou encore par un filtre constitué de cellules colorées des couleurs primaires et plus connu sous l'appellation de filtre de Bayer. Ils ont pour fonction de séparer la lumière selon un certain de nombre de couleurs dites couleurs de base ou couleur fondamentale. En règle générale ces filtres séparent la lumière selon les trois couleurs de base ou couleurs fondamentales que sont le rouge le vert et le bleu. Toutefois il est également possible à titre d'exemple de réaliser des filtres comprenant plus de trois couleurs fondamentales tels que les filtres aptes à séparer la lumière en quatre couleurs de base comprenant le rouge, le vert, le bleu et le cyan.

L'image réfléchie provenant de l'objet à examiner est donc décomposée en autant d'images monochromes que de couleurs de base ou de couleur fondamentales. Chacune de ces images est alors dirigée vers un capteur spécifique, formé par un assemblage de photosites sensibles à la lumière tels que des capteurs CCD ou CMOS aptes à transformer la quantité de lumière qu'ils reçoivent en courant électrique. On obtient donc autant d'image en niveau de gris que de couleurs de base. La résolution maximale d'un capteur est fonction du nombre de photosites auquel correspond le nombre de pixels formant l'image finale.

La restitution de l'image finale en couleur est formée par la combinaison simultanée des images monochromes dans chacunes des couleurs de base ou fondamentale, selon le principe connu de la synthèse additive, chacune de ces images pouvant être formée par exemple par la projection de l'image en niveau de gris au travers d'un filtre de la couleur de base correspondante.

L'objet de l'invention consiste à tirer partie de ce mode de fonctionnement pour obtenir des informations particulières concernant l'objet à évaluer.

Le dispositif d'évaluation de l'aspect de la surface d'un pneumatique selon l'invention comprend les caractéristiques définites dans la rev. indepandante 1.

Ce dispositif se caractérise en ce que chacun des moyens d'éclairage émet une lumière de couleur, différente de celle des autres moyens d'éclairage, et dont la longueur d'onde correspond sensiblement au maximum de sensibilité du capteur de la caméra destiné à recevoir le faisceau de lumière de ladite couleur

Bien qu'il soit possible, dans la théorie, d'utiliser une caméra matricielle, on préférera le choix d'une caméra linéaire, dans le cadre de la mise en oeuvre du dispositif selon l'invention, pour l'évaluation de la surface d'un pneumatique dont les formes sont généralement convexes. En effet, une caméra linéaire permet de faire l'acquisition d'une image selon un angle de vue constant et sous une incidence de l'éclairage constant. Ce type de caméra autorise également une meilleure précision du réglage de la profondeur de champ, et une meilleure résolution.

De cette façon, il est possible de déterminer l'origine de la source de lumière pour chacune des images en niveau de gris de la lumière réfléchie par l'objet à évaluer. Dans le cadre d'un réglage optimum, la lumière issue d'une couleur de base donnée et réfléchie par la surface à évaluer, est filtrée par le jeu de prismes disposés à l'entrée de la caméra, et dirigée vers le seul capteur correspondant à la longueur d'onde de cette lumière. Et la lumière provenant des autres sources de lumière est filtrée par ledit jeu de prismes et ne parvient pas sur le capteur en question.

Chacun des éclairages étant disposé de manière à éclairer l'objet à évaluer selon un angle d'incidence donné, cela revient à obtenir simultanément au moins deux images différentes, dont l'analyse va permettre de déterminer le relief et la brillance de la surface du pneumatique. On s'affranchit ainsi de la nécessité de procéder à la superposition des images dés lors qu'elles proviennent de l'acquisition par une même caméra du même rayon lumineux. Et il n'est plus nécessaire de mettre en oeuvre un jeu de plusieurs caméras pour obtenir le même résultat.

On observera par ailleurs que la réalisation de l'image d'un pneumatique peut se faire en un seul tour, ce qui est un avantage supplémentaire en regard des temps technologiques nécessaires à l'inspection d'un pneumatique.

Un moyen de calcul associé au dispositif d'évaluation permet de calculer de manière connue les coordonnées de chacun des pixels de l'image obtenue et d'associer à ces pixels des valeurs concernant le relief et le niveau de brillance de la surface à analyser.

Une première application de l'invention consiste à utiliser un dispositif dans lequel on sépare le faisceau lumineux en deux couleurs. Les deux images prises selon des angles différents font apparaître des zones d'ombres et des zones éclairées différentes ce qui permet de déduire la nature du relief de la surface et son orientation par rapport à un niveau de surface moyen.

Les informations de brillance peuvent être obtenues en faisant, par exemple, la moyenne de la brillance mesurée sur les deux images.

Toutefois l'application la plus intéressante de l'invention consiste à utiliser une caméra apte à séparer la lumière réfléchie selon les trois couleurs de base, correspondant en règle générale aux trois couleurs fondamentales : rouge, vert et bleu, et comportant trois jeux de capteurs affectés à chacune de ces couleurs fondamentales.

On disposera donc trois éclairages de couleur respectivement rouge, vert et bleu pour éclairer la surface du pneumatique à évaluer.

Selon cette mise en oeuvre particulière de l'invention, on s'arrange alors pour que un des moyens d'éclairage éclaire la surface à évaluer selon une direction sensiblement perpendiculaire à la surface, de sorte que l'image obtenue sur le capteur dont la couleur correspond à cet éclairage fasse apparaître le fond des reliefs de la surface.

Les deux autres moyens d'éclairage sont disposés pour faire apparaître les reliefs, et font un angle non nul avec la direction perpendiculaire à la surface à examiner.

L'analyse comparative des images permet alors de déterminer avec précision la nature des taches observées sur la surface, en faisant la différence entre les taches de graisse ou les taches liées à des marquages ou à des salissures, comme cela sera expliqué en détail ultérieurement.

Les méthodes d'évaluation de la surfaces d'un pneumatique selon l'invention sont défini dans les revs. indepandantes 10 et 11.

La description qui suit, s'appuie sur un mode préféré de mise en oeuvre de l'invention dans laquelle,
- la figure 1 représente une vue schématique générale du dispositif selon l'invention,
- la figure 2 représente les courbes de sensibilité des capteurs d'une caméra RGB,
- les figures 3, 4 et 5 représentent les modes d'analyse des reliefs et des taches,
- les figures 6, 7 et 8 représentent des vues photographiques de la bande de roulement d'un pneumatique selon des angles d'éclairage différents.

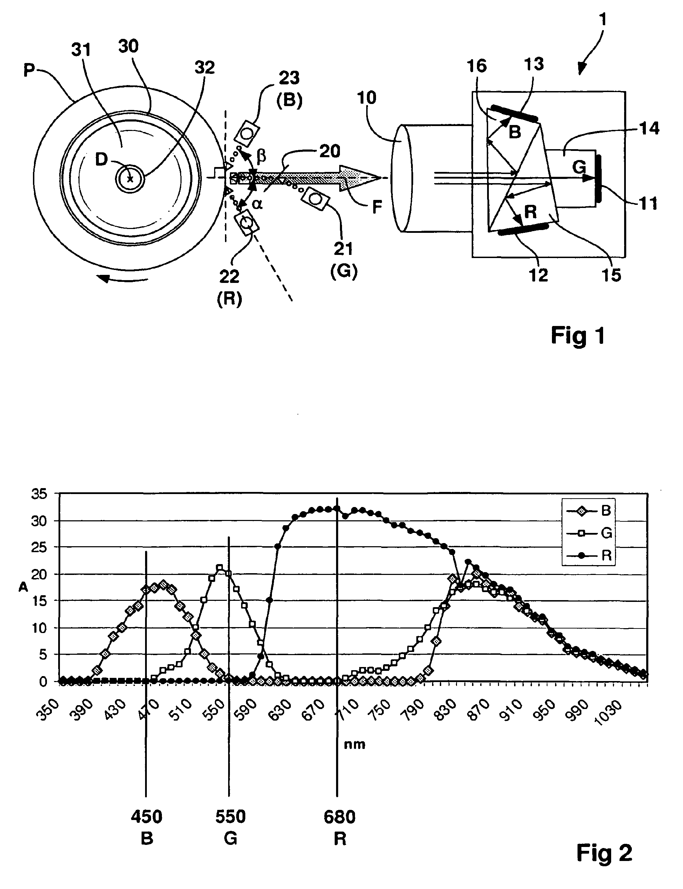

Le dispositif illustré par la figure 1 représente une caméra 1 équipée d'un objectif d'entrée 10 par lequel pénètre la lumière réfléchie F provenant de la surface de l'objet à examiner, en l'espèce la bande de roulement d'un pneumatique P. Le pneumatique P est monté sur la jante 30, d'une roue 31 entraînée en rotation autour de l'axe D par un moyeu porteur motorisé 32.

La surface du pneumatique est éclairée par trois sources de lumière, 21, 22 et 23. La lumière émise par le premier moyen d'éclairage 21 est envoyée vers une lame semi réfléchissante 20, disposée de telle sorte que la lumière arrive sur la surface à évaluer selon une direction sensiblement perpendiculaire à ladite surface.

Des deuxième et troisième moyen d'éclairage sont disposés de manière à éclairer la surface selon des angles incident α, β non nul par rapport à la direction perpendiculaire à la surface du pneumatique. En pratique, il est intéressant d'obtenir une lumière rasante apte à faire ressortir les reliefs de la surface, aussi, ces angle α, β sont avantageusement supérieur à 30°.

La caméra 1 est disposée de manière à recevoir les rayons réfléchis F selon une direction sensiblement perpendiculaire à la surface de réception. Le rayon lumineux F pénètre dans la caméra et vient éclairer des prismes réfléchissants, respectivement 14, 15 et 16, qui vont séparer et réfléchir la lumière de manière à orienter cette lumière vers des capteurs de luminosité placés dans la caméra, respectivement 11, 12 et 13, lesdits capteurs étant aptes à filtrer la lumière selon une longueur d'onde précise

Le prisme réfléchissant 14 va laisser passer la lumière de couleur verte G, de telle sorte que le capteur 11 forme une image en niveau de gris de la surface correspondant à la seule lumière réfléchie de couleur verte. On s'arrange pour que la couleur de la lumière émise par le premier moyen d'éclairage 21 corresponde au maximum de sensibilité de ce capteur 11 tel que cela est illustré à la figure 2, où le maximum de sensibilité A de la caméra pour la couleur verte G se situe, à titre d'exemple aux alentours d'une longueur d'onde de 550 nm pour laquelle la réponse de la caméra est également minimale pour les deux autres couleurs rouge et bleu.

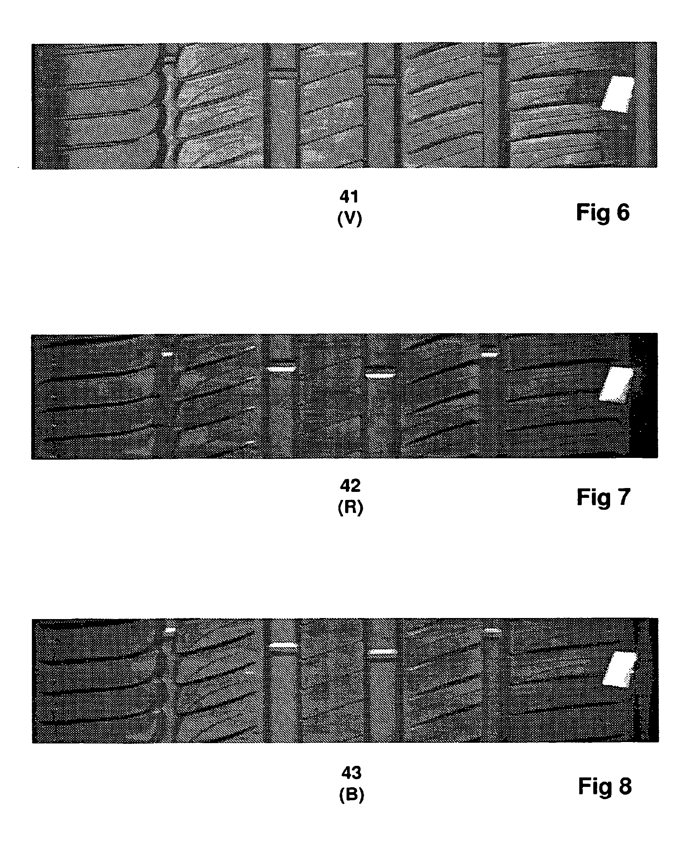

Ainsi l'image formée par le capteur de lumière 11 correspond sensiblement à l'image de la surface éclairée par une lumière faisant un droit avec la surface. Cette image 41, illustrée à titre d'exemple à la figure 6, permet de voir avec précision les fonds de sculpture.

Le prisme réfléchissant 15 va laisser passer la lumière de couleur rouge R de telle sorte quel le capteur 12 forme une image en niveau de gris de la surface correspondant à la seule lumière réfléchie de couleur rouge R. La couleur de la lumière émise par le deuxième moyen d'éclairage 22 correspond au maximum de sensibilité de la caméra pour la couleur rouge, aux alentours de 690 nm, et qui correspond à titre d'exemple à la sensibilité minimale de le caméra pour les couleurs verte et bleu.

Ainsi, l'image en niveau de gris formée par le capteur 12 correspond à l'image de la surface éclairée par une lumière faisant un angle a avec la direction perpendiculaire à ladite surface. Cette image 42, illustrée à titre d'exemple à la figure 7, met en évidence les reliefs de la sculpture du pneumatique en faisant ressortir les zones éclairées et les zones d'ombre lorsque la surface est éclairée par le deuxième moyen d'éclairage 22.

Enfin, le prisme réfléchissant 16 va laisser passer la lumière de couleur bleu B de telle sorte que le capteur 13 forme une image en niveau de gris correspondant à la seule lumière réfléchie de couleur bleu B. La couleur de la lumière émise par le troisième moyen d'éclairage 23 correspond au maximum de sensibilité de la caméra pour la couleur bleu, soit 450 nm, et qui correspond à titre d'exemple à la sensibilité minimale de la caméra pour les couleurs verte et rouge.

Cette dernière image 43, illustrée à titre d'exemple à la figure 8, met en évidence les zones d'ombres et les zones éclairées par le troisième moyen d'éclairage 23.

De manière à limiter les effets parasites liés aux longueurs d'onde correspondant au proche infrarouge, il s'avère avantageux de placer un filtre sur l'objectif de la caméra apte à limiter l'entrée des rayons lumineux d'une longueur d'onde supérieure à 750nm. D'autres filtres passe bande peuvent être également ajoutés, de manière à empêcher l'entrée de lumières de longueurs d'ondes parasites. Aussi, de manière plus générale on cherchera à filtrer le passage des rayons lumineux dont la longueur d'onde est différente de celles utilisées par les éclairages choisis.

On dispose alors de trois images en niveau de gris dont l'analyse va permettre de déterminer les caractéristiques de relief et de brillance de la surface à examiner. On observera que la recombinaison de ces trois images sur un écran de visualisation d'une image couleur classique ne donne pas l'image couleur de la surface du pneumatique. En effet, la source de lumière n'est pas une lumière blanche, et chacune des composantes de cette lumière provient d'une source ayant son orientation propre.

Le dispositif d'évaluation selon l'invention comporte également un moyen d'analyse apte à calculer les coordonnées de chacun des pixels formant l'image. On observera à nouveau qu'il n'y a pas de nécessité de procéder à des ajustements pour faire correspondre les trois images obtenues précédemment puisqu'elles proviennent du même rayon lumineux réfléchi par la surface à examiner, et qu'elles sont acquises par la même caméra.

Une première analyse consiste à fusionner les différentes images en niveau de gris, par exemple en faisant la moyenne des valeurs trois valeurs de brillance obtenues en un point donné. L'image en niveau de gris qui en résulte présente l'avantage de réduire les valeurs de brillance parasites liées à la courbure de la surface. Cette opération simple, permet d'obtenir une image en noir et blanc à faible niveau de bruit.

La fusion de ces images, par l'utilisation de fonction statistique simple, permet également d'éliminer l'impact lié à la courbure du pneumatique et obtenir des acquisitions plus homogènes.

Une deuxième analyse permet de distinguer les éléments en relief par interprétation des zones d'ombre et de lumière en un point de coordonnées données. L'utilisation d'algorithmes du type "shadow carving" dont le principe connu en soi consiste à mettre en rapport la longueur de l'ombre projetée et l'angle de la lumière incidente, permet d'obtenir une estimation de l'orientation et de la taille de l'élément en relief par rapport à la surface moyenne.

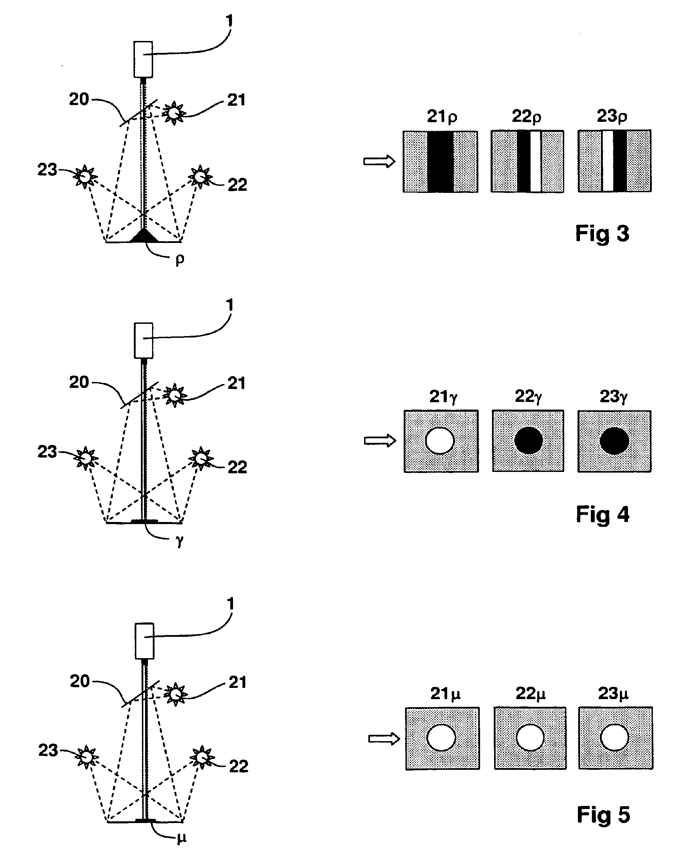

La figure 3 permet d'illustrer ce deuxième type d'analyse. La lumière réfléchie par le moyen d'éclairage 21 est faible. L'image 21p de l'élément de relief p issue du capteur 11 est une image sombre. L'image 22p de ce même relief p issue du capteur 12 sera brillante du coté du relief éclairé par le moyen d'éclairage 22 et sombre de l'autre coté. Enfin, l'image 23p issue du capteur 13 sera brillante du coté du relief éclairé par le moyen d'éclairage 23 et sombre de l'autre coté. On en déduit aisément la hauteur et la forme du relief par un calcul de triangulation.

Une troisième analyse comparative des images obtenues par le dispositif permet également de distinguer la nature des taches présentes à la surface du pneumatique à évaluer.

Il est connu en effet que la lumière réfléchie par une tache de nature graisseuse varie considérablement en fonction de l'angle d'incidence de la source de lumière, et peut être assimilé à l'effet réfléchissant d'un miroir. Cette valeur est généralement maximale lorsque l'angle d'incidence est sensiblement équivalent à l'angle de visualisation, et diminue au fur et à mesure que la différence entre ces angles augmente. La réflexion de la lumière est alors presque totale et la diffusion très limitée. Aussi, en plaçant l'axe de visualisation de la caméra selon une direction perpendiculaire à la surface l'intensité réfléchie par une tache de graisse sera maximale selon cette même direction perpendiculaire.

La figure 4 illustre ce phénomène. Ainsi, l'image 21γ issue du capteur 11 d'une tache γ de nature graisseuse éclairée selon une direction perpendiculaire à la surface de la tache sera brillante. En revanche les images 22γ et 23γ de cette même tache γ issues des capteurs 12 et 13 seront sombres.

Ce phénomène permet de distinguer une tache graisseuse γ d'une marque µ, par exemple une marque provenant d'une craie ou d'un moyen de marquage couleur destiné à identifier le pneumatique. En effet, l'image de cette marque µ est peu sensible à la variation de l'angle d'incidence du moyen d'éclairage. Aussi cette marque µ sera vue avec le même niveau de brillance, 21µ, 22µ et 23µ par les trois capteurs 11, 12 et 13, comme cela est illustré par la figure 5. Contrairement à la tache graisseuse la diffusion de la lumière est alors très supérieure à la réflexion.

L'exemple de mise en oeuvre de l'invention selon la description ci-dessus correspond à l'utilisation d'une caméra standard comprenant des moyens de séparation de la lumière selon les trois couleurs fondamentales rouge vert et bleu.

Il peut toutefois s'avérer intéressant d'utiliser des caméras possédant un plus grand nombre de couleur de base de manière à augmenter le nombre d'image provenant de moyens d'éclairage plus nombreux. En utilisant une caméra du type RGBE il est possible de disposer les trois sources de lumières rasantes selon des directions faisant entre elles un angle de 120°, de sorte que les éléments de reliefs puissent être vus de manière plus circonférentielle.

Ainsi, l'exemple ayant servi de support à la présente description n'est pas limitatif de la mise en oeuvre de l'invention dont les principes peuvent être généralisés à un plus grand nombre de moyens d'éclairage et à une variété d'objets dont on cherche à évaluer la géométrie et l'aspect et présentant un relief de surface tourmenté et une couleur uniforme proche du noir peu apte à mettre en évidence les zones d'ombre liées au relief.

## Revendications

1. Dispositif d'évaluation: de l'aspect de la surface d'un pneumatique (P) comprenant :
- une unique caméra linéaire couleur (1) comportant des moyens (14, 15, 16) de séparation du faisceau de lumière réfléchie (F) par la surface dudit pneumatique (P) et entrant dans la caméra (1) en au mois deux faisceaux lumineux des couleurs de base (R, G, B) de longueur d'onde donnée, de manière à diriger un faisceau lumineux sur un capteur (11, 12, 13) apte à obtenir une image de base en niveau de gris (41, 42, 43) la caméra ayant un capteur different pour chacune des couleurs de base,
- autant de moyen d'éclairage (21, 22, 23) que de couleurs de base, lesdits moyens d'éclairage étant orientés de manière à éclairer la surface à évaluer selon des angles donnés et différents, chacun des moyens d'éclairage (21, 22, 23) émetant une lumière de couleur (R, G, B), différente de celle des autres moyens d'éclairage, et dont la longueur d'onde correspond sensiblement au maximum de sensibilité du capteur (11, 12, 13) de la caméra destiné à recevoir le faisceau de lumière de ladite couleur,
- des moyens aptes à calculer à partir des images de base provenant de ladite caméra les coordonnées de chacun des pixels formant l'image, et à associer à chacun desdits pixels une information concernant le relief et le niveau d'intensité lumineuse de la surface à évaluer.

2. Dispositif selon la revendication 1 comprenant en outre des moyens aptes à mettre en mouvement (30, 31, 32) relatif la surface du pneumatique par rapport à la caméra (1) et aux moyens d'éclairage (21, 22, 23).

3. Dispositif selon l'une des revendication 1 à 2, dans lequel un premier moyen d'éclairage (21) est orienté selon une direction sensiblement perpendiculaire à la surface à évaluer.

4. Dispositif selon la revendication 3, dans lequel la caméra (1) est apte à séparer trois couleurs de base (R, G, B).

5. Dispositif selon la revendication 4, dans lequel les trois couleurs de base sont le rouge, le vert et le bleu.

6. Dispositif selon l'un des revendications 4 ou 5, dans lequel les faisceaux d'un deuxième (22) et d'un troisième (23) moyen d'éclairage sont orientés selon des directions formant un angle (α, β) non nul avec ladite direction.

7. Dispositif selon la revendication 6 dans lequel l'angle (α, β) formé par le faisceau des deuxième (22) et troisième (23) moyens d'éclairage avec la direction verticale est supérieur à 30°.

8. Dispositif selon la revendication 7 dans lequel l'objectif de la caméra (1) comporte un filtre d'entrée apte à bloquer le passage des rayons lumineux dont la longueur d'onde est différente de celles utilisées par les éclairages choisis.

9. Dispositif selon la revendication 8 dans lequel l'objectif de la caméra (1) comporte un filtre d'entrée apte à bloquer le passage des rayons lumineux dont la longueur d'onde est supérieure à 750 nm environ.

10. Méthode d'évaluation de la surface d'un pneumatique dans laquelle on utilise un dispositif selon l'une des revendications 1 à 9 pour déterminer le relief de la surface à évaluer en analysant les longueurs des ombres projetées sur chacune des images en niveau de gris (41, 42, 43) provenant de chacun des capteurs (11, 12, 13) correspondant à l'image de la surface vue selon chacun des angles d'éclairage de chacun des moyens d'éclairage (21, 22 23) faisant un angle non nul (α, β) avec la direction perpendiculaire à la surface à analyser.

11. Méthode d'évaluation de la surface d'un pneumatique dans laquelle on utilise un dispositif selon l'une des revendications 1 à 9 pour déterminer la valeur de brillance en un point de ladite surface en faisant, en ce point, la moyenne des valeurs de brillance obtenues sur chacune des images provenant de chacun des capteurs (11, 12, 13) correspondant à l'image de la surface vue selon chacun des angles d'éclairage de chacun des moyens d'éclairage (21, 22 23).

12. Méthode d'évaluation selon la revendication 11, dans laquelle on distingue une tache de nature graisseuse (γ) lorsque ladite tache n'est visible que sur l'image de base issue d'un premier capteur (11) sensible à la lumière provenant d'un premier moyen d'éclairage (21) orienté selon une direction sensiblement perpendiculaire à la surface à évaluer

## Claims

1. Device for evaluating the appearance of the surface of a tire (P) comprising:
- a single colour linear camera (1) comprising means (14, 15, 16) for separating the light beam (F) reflected by the surface of said tyre (P) and entering the camera (1) in at least two light beams of the base colours (R, G, B) of given wavelength, so as to direct a light beam to one sensor (11, 12, 13) capable of obtaining a basic image in gray level (41, 42, 43), the camera having a different sensor for each of the base colours,
- as many lighting means (21, 22, 23) as base colours, said lighting means being oriented so as to light the surface to be evaluated at given but different angles, each of the lighting means (21, 22, 23) emitting a coloured light (R, G, B) that differs from that of the other lighting means, the wavelength of which corresponds substantially to the maximum sensitivity of the sensor (11, 12, 13) of the camera designed to receive the light beam of said colour,
- means capable of calculating, from the base images originating from said camera, the coordinates of each of the pixels forming the image, and of associating each of said pixels with an item of information relating to the relief and the level of light intensity of the surface to be evaluated.

2. Device according to Claim 1, also comprising means (30, 31, 32) capable of setting in relative motion the surface of the tire relative to the camera (1) and to the lighting means (21, 22, 23).

3. Device according to either of Claims 1 and 2, wherein a first lighting means (21) is oriented in a direction substantially perpendicular to the surface to be evaluated.

4. Device according to Claim 3, wherein the camera (1) is capable of separating three base colours (R, G, B) .

5. Device according to Claim 4, wherein the three base colours are red, green and blue.

6. Device according to either of Claims 4 and 5, wherein the light beams of a second lighting means (22) and of a third lighting means (23) are oriented in directions forming a non-zero angle (α, β) with said direction.

7. Device according to Claim 6, wherein the angle (α, β) formed by the beam of the second (22) and third (23) lighting means with the vertical direction is greater than 30°.

8. Device according to Claim 7, wherein the lens of the camera (1) comprises an input filter capable of blocking the passage of the light rays of which the wavelength is different from those used by the chosen lighting means.

9. Device according to Claim 8, wherein the lens of the camera (1) comprises an input filter capable of blocking the passage of the light rays of which the wavelength is greater than approximately 750 nm.

10. Method for evaluating the surface of a tyre in which a device according to one of Claims 1 to 9 is used for determining the relief of the surface to be evaluated by analysing the lengths of the shadows projected on each of the images in grey level (41, 42, 43) originating from each of the sensors (11, 12, 13) corresponding to the image of the surface seen from each of the lighting angles of each of the lighting means (21, 22 23) making a non-zero angle (α, β) with the direction perpendicular to the surface to be analysed.

11. Method for evaluating the surface of a tyre in which a device according to any one of Claims 1 to 9 is used to determine the brightness value at a point of the said surface by averaging, at this point, the brightness values obtained on each of the images originating from each of the sensors (11, 12, 13) corresponding to the image of the surface viewed at each of the lighting angles of each of the lighting means (21, 22, 23).

12. Evaluation method according to Claim 11, wherein a greasy mark (γ) is distinguished when said mark is visible only on the base image originating from a first sensor (11) sensitive to the light originating from a first lighting means (21) oriented in a direction substantially perpendicular to the surface to be evaluated.

## Patentansprüche

1. Vorrichtung zur Bewertung des Aussehens der Fläche eines Luftreifens (P), die enthält:
- eine einzige Farbzeilenkamera (1), die Einrichtungen (14, 15, 16) zur Trennung des von der Fläche des Luftreifens (P) reflektierten und in die Kamera (1) eintretenden Lichtstrahls (F) in mindestens zwei Lichtstrahlen der Grundfarben (R, G, B) von gegebener Wellenlänge aufweist, um einen Lichtstrahl auf einen Sensor (11, 12, 13) zu richten, der ein Graustufen-Basisbild (41, 42, 43) erhalten kann, wobei die Kamera für jede der Grundfarben einen anderen Sensor hat,
- ebenso viele Beleuchtungseinrichtungen (21, 22, 23) wie Grundfarben, wobei die Beleuchtungseinrichtungen so ausgerichtet sind, dass sie die zu bewertende Fläche gemäß gegebenen und unterschiedlichen Winkeln beleuchten, wobei jede der Beleuchtungseinrichtungen (21, 22, 23) ein Licht einer anderen Farbe (R, G, B) als diejenige der anderen Beleuchtungseinrichtungen emittiert, und dessen Wellenlänge im Wesentlichen der maximalen Empfindlichkeit des Sensors (11, 12, 13) der Kamera entspricht, der den Lichtstrahl der Farbe empfangen soll,
- Einrichtungen, die ausgehend von den von der Kamera kommenden Grundbildern die Koordinaten jedes der das Bild formenden Pixel berechnen und jedem der Pixel eine Information zuordnen können, die das Relief und den Lichtstärkepegel der zu bewertenden Fläche betrifft.

2. Vorrichtung nach Anspruch 1, die außerdem Einrichtungen (30, 31, 32) enthält, die die Fläche des Luftreifens bezüglich der Kamera (1) und der Beleuchtungseinrichtungen (21, 22, 23) in relative Bewegung versetzen können.

3. Vorrichtung nach einem der Ansprüche 1 bis 2, bei der eine erste Beleuchtungseinrichtung (21) gemäß einer Richtung im Wesentlichen lotrecht zur zu bewertenden Fläche ausgerichtet ist.

4. Vorrichtung nach Anspruch 3, bei der die Kamera (1) drei Grundfarben (R, G, B) trennen kann.

5. Vorrichtung nach Anspruch 4, bei der die drei Grundfarben Rot, Grün und Blau sind.

6. Vorrichtung nach einem der Ansprüche 4 oder 5, bei der die Strahlen einer zweien (22) und einer dritten (23) Beleuchtungseinrichtung gemäß Richtungen ausgerichtet sind, die einen Winkel (α, β) ungleich Null mit der Richtung bilden.

7. Vorrichtung nach Anspruch 6, bei der der vom Strahl der zweiten (22) und dritten (23) Beleuchtungseinrichtung mit der senkrechten Richtung gebildete Winkel (α, β) größer als 30° ist.

8. Vorrichtung nach Anspruch 7, bei der das Objektiv der Kamera (1) einen Eingangsfilter aufweist, der den Durchgang der Lichtstrahlen blockieren kann, deren Wellenlänge sich von denjenigen unterscheidet, die von den gewählten Beleuchtungen verwendet werden.

9. Vorrichtung nach Anspruch 8, bei der das Objektiv der Kamera (1) einen Eingangsfilter aufweist, der den Durchgang der Lichtstrahlen blockieren kann, deren Wellenlänge größer als etwa 750 nm ist.

10. Verfahren zur Bewertung der Fläche eines Luftreifens, bei dem eine Vorrichtung nach einem der Ansprüche 1 bis 9 verwendet wird, um das Relief der zu bewertenden Fläche zu bestimmen, indem die Längen der auf jedes der von jedem der Sensoren (11, 12, 13) kommenden Graustufenbilder (41, 42, 43) projizierten Schatten analysiert werden, das dem Bild der Fläche gemäß jedem der Beleuchtungswinkel jeder der Beleuchtungseinrichtungen (21, 22, 23) gesehen entspricht, die einen Winkel ungleich Null (α, β) mit der Richtung lotrecht zur zu analysierenden Fläche bilden.

11. Verfahren zur Bewertung der Fläche eines Luftreifens, bei dem eine Vorrichtung nach einem der Ansprüche 1 bis 9 verwender wird, um den Leuchtkraftwert an einem Punkt der Fläche zu bestimmen, indem an diesem Punkt der Mittelwert der Leuchtkraftwerte festgelegt wird, die an jedem der von jedem der Sensoren (11, 12, 13) kommenden Bilder erhalten werden, das dem Bild der Fläche gemäß jedem der Beleuchtungswinkel jeder der Beleuchtungseinrichtungen (21, 22, 23) gesehen entspricht.

12. Bewertungsverfahren nach Anspruch 11, bei dem ein Fettfleck (γ) festgestellt wird, wenn der Fleck nur auf dem Basisbild sichtbar ist, das von einem ersten Sensor (11) stammt, der für das Licht empfindlich ist, das von einer ersten Beleuchtungseinrichtung (21) kommt, die gemäß einer Richtung im Wesentlichen lotrecht zur zu bewertenden Fläche ausgerichtet ist.
